# FASCICULE DE BREVET EUROPEEN

(11) **EP 1 916 141 B1**
(45) Date de publication et mention de la délivrance du brevet: **09.03.2011**
(21) Numéro de dépôt: 07291208.2
(22) Date de dépôt: 04.10.2007
(51) Int. Cl.: B60K 6/20

(54) **Système d'entrainement en déplacement pour véhicule hybride**
Antriebssystem für Hybridfahrzeuge
Drive train for a hybrid vehicle

(30) Priorité: 26.10.2006 FR 0609491
(43) Date de publication de la demande: 30.04.2008
(73) Titulaire: IFP Energies Nouvelles, 92852 Rueil-Malmaison Cedex (FR)
(72) Inventeur: Pagot, Alexandre, 92500 Rueil Malmaison (FR); Venturi, Stéphane, 07100 Roiffieux (FR)

(56) Documents cités:
- EP-A2- 1 122 109
- WO-A-2005/100777

## Description

La présente invention se rapporte à un système d'entraînement, en traction ou en propulsion, de véhicules de type hybride.

Généralement, ce type de véhicules combine un moteur thermique, principalement à combustion interne, et une machine électrique reliée à une source électrique, telle que un ou plusieurs accumulateurs électriques, pour réaliser leurs propulsions. Cette combinaison permet d'optimiser le rendement énergétique du système d'entraînement tout en diminuant la consommation totale en carburant et en limitant le rejet de polluants.

Dans l'exemple décrit dans le document FR 2 670 440, le moteur thermique comprend un arbre de sortie qui entraîne la partie motrice d'une transmission variable, comme un variateur de vitesse, et dont la partie réceptrice de cette transmission est reliée à l'essieu moteur du véhicule. L'arbre de sortie porte, entre le moteur thermique et le variateur de vitesse, une machine électrique reliée à une batterie électrique et deux embrayages, un premier embrayage entre le moteur thermique et la machine électrique et un deuxième embrayage entre la machine électrique et le variateur de vitesse.

Lorsque l'on souhaite entraîner en déplacement le véhicule avec un couple important disponible sur une grande plage de vitesses tout en limitant la génération de gaz d'échappement et de bruit, comme dans un site urbain, l'utilisation de la machine électrique est privilégiée pour entraîner l'essieu moteur du véhicule.
Par contre, pour des utilisations où une puissance d'entraînement élevée et une grande autonomie de fonctionnement sont demandées, le moteur thermique est utilisé pour entraîner l'essieu moteur et assurer ainsi le déplacement du véhicule.

Ce système d'entraînement bien que donnant satisfaction présente néanmoins des inconvénients non négligeables.

En effet, lorsque seule la machine électrique est utilisée pour entraîner le véhicule, celle-ci doit posséder un couple et/ou une puissance suffisants non seulement pour entraîner le véhicule mais aussi pour vaincre toute les résistances (inertie, frottement, ...) que possède la transmission variable. En outre, lors des opérations de freinage du véhicule, une partie de l'énergie dégagée par ce freinage est absorbée par le variateur de vitesse et seule une autre partie de cette énergie est récupérée puis transformée par la machine électrique.

Dans le cas de l'utilisation d'une boite de vitesse mécanique en lieu et place du variateur, il est essentiel, pour récupérer l'énergie de freinage, de changer de rapport de boite. Pour ce faire, il est nécessaire de désaccoupler l'essieu moteur, ce qui entraîne une rupture de transmission de mouvement et une interruption de la récupération d'énergie de freinage.

Il est également connu par le document WO 2005/100777, un autre système d'entraînement, selon le preambule de la revendication 1, qui comprend un moteur thermique avec un embrayage entre ce moteur et une boite de vitesse, une chaîne de transmission de mouvement entre la boite de vitesse et les roues du véhicules, une machine électrique, un accouplement débrayable entre un des éléments de la chaîne de transmission et le rotor de la machine électrique et un autre accouplement débrayable entre l'arbre de sortie du moteur thermique et le rotor de cette machine.

Ce dispositif présente l'inconvénient d'être extrêmement compliqué avec une multiplicité d'éléments nécessaires à la réalisation des différentes phases d'accouplements de la machine électrique avec le moteur ou avec chaîne de transmission de mouvement.

La présente invention se propose de remédier aux inconvénients ci-dessus mentionnés grâce à un système d'entraînement simple et ne nécessitant pas de dispositifs de commande compliqués pour assurer: les différentes utilisations de ce système.

A cet effet, invention concerne un système d'entraînement un système d'entraînement en déplacement pour véhicule hybride comprenant un moteur thermique avec un arbre de sortie moteur portant un embrayage, un arbre mené relié audit embrayage et connecté à un moyen de variation de vitesse, au moins une machine électrique avec un rotor, une chaîne de transmission de mouvement entre le moyen de variation de vitesse et les roues du véhicule, ladite chaîne comportant un arbre de sortie du moyen de variation de vitesse et un essieu moteur relié audit arbre de sortie, un accouplement débrayable à engrènement entre un des éléments de la chaîne de transmission et le rotor de la machine électrique et un autre accouplement débrayable à engrènement entre l'arbre de sortie du moteur thermique et ledit rotor, caractérisé en ce que le rotor de la machine électrique porte une partie d'accouplement opérationnel avec une autre partie de l'un ou l'autre des accouplements, et la partie est un pignon mobile axialement le long dudit rotor.

L'essieu moteur peut porter une roue dentée, liée en rotation avec ledit essieu, pour coopérer avec le pignon de manière à former un accouplement débrayable.

L'arbre de sortie de boite peut porter une roue dentée pour coopérer avec le pignon de manière à former un accouplement débrayable.

L'arbre de sortie peut porter une roue dentée, liée en rotation avec ledit arbre et placée entre le moteur thermique et l'embrayage, pour coopérer avec le pignon de manière à former un autre accouplement débrayable.

Le système d'entraînement peut comprendre des moyens de commande en déplacement du pignon.

Les autres caractéristiques et avantages de invention vont apparaître maintenant à la lecture de la description qui va suivre, donnée à titre uniquement illustratif et non limitatif, et à laquelle sont annexées :
- la figure 1 qui est un schéma montrant un système d'entraînement d'un véhicule hybride selon l'invention pour une première configuration et
- la figure 2 qui montre le système de la figure 1 dans une seconde configuration.

Sur ces figures, le système d'entraînement d'un véhicule hybride comprend un moteur thermique 10, notamment un moteur à combustion interne, avec un arbre de sortie moteur 12 muni d'un embrayage 14 connecté à un arbre mené 18 relié à une transmission variable 20, telle qu'une boite de vitesse robotisée, cet arbre mené servant d'arbre d'entrée de boite. A la suite de cette boite de vitesse est prévue une chaîne de transmission de mouvement 16 entre cette boite et les roues 17 du véhicule. Cette chaîne comprend une multiplicité d'éléments. Avec un arbre de sortie 22 de la boite de vitesse relié à un essieu moteur 24, directement ou par l'intermédiaire d'une transmission 26, comme un pont différentiel, qui entraîne les roues du véhicule. L'essieu moteur comprend également une des parties d'un premier accouplement débrayable 28 qui, dans l'exemple illustré, est une roue dentée 30 d'un accouplement à engrènement.

La boite de vitesse 20 peut donc être désaccouplée de l'arbre moteur 12 par l'intermédiaire de l'embrayage 14 placé sur cet arbre et contrôlé par tous moyens connus. Sur l'arbre moteur et entre l'embrayage 14 et le moteur 10 est placé une des parties d'un deuxième accouplement débrayable 32 qui est de préférence une roue dentée 34 d'un accouplement à engrènement.

Le système d'entraînement comprend également une machine électrique 36 alimentée par des accumulateurs électriques 38 (ou batteries) et contrôlée par un organe de commande 40. La machine 36 comporte un rotor 42 portant l'autre des parties des accouplements, ici un pignon baladeur 44, apte à engrener avec la roue dentée 34 de l'arbre moteur ou la roue dentée 30 de l'essieu moteur. Pour ce faire, ce pignon coulisse axialement sur le rotor entre ces deux positions sous l'action d'un moyen de commande 46, comme une fourchette 48 commandée par un vérin 50, préférentiellement de type électromagnétique. De plus, ce pignon peut être placé, sous l'action du moyen de commande, dans une position, dite neutre, dans laquelle il est libre de tout engrènement avec les roues dentées 30, 34. Ainsi, le premier accouplement est formé de la roue dentée 30 engrenant avec le pignon 44 et le deuxième accouplement est constitué de la roue dentée 34 engrenant également avec le pignon 44.

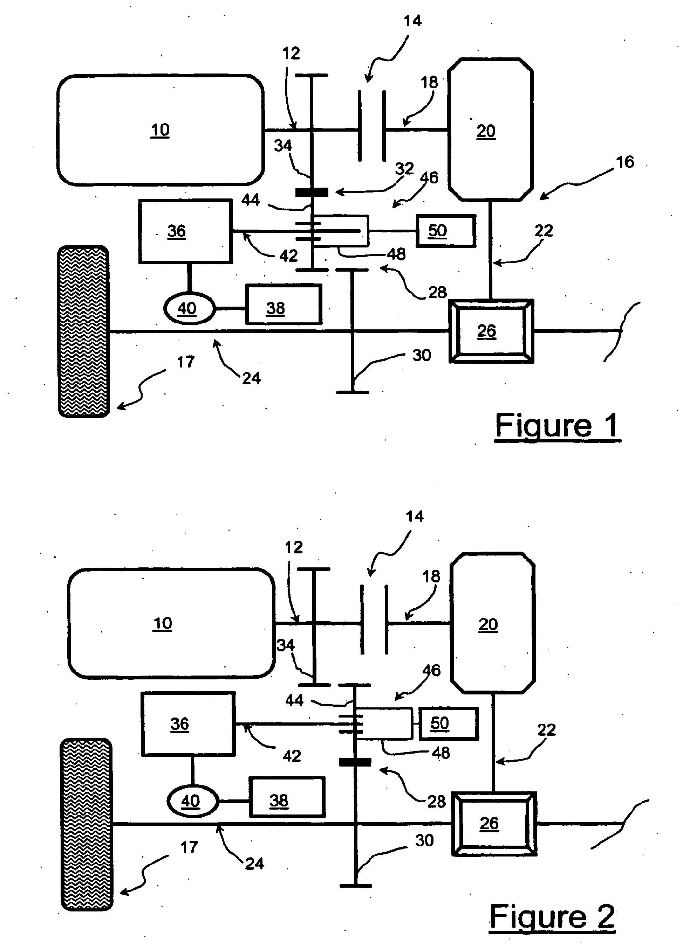

Pour le fonctionnement selon la configuration de la figure 1 où le moteur thermique 10 est employé pour entraîner le véhicule par son essieu moteur 24, la machine électrique 36 est utilisée, dans une première étape, pour assurer le démarrage du moteur puis peut servir de génératrice de courant pour alimenter les différents appareils et accessoires du véhicule et/ou recharger les batteries du véhicule.
Dans la première étape, l'embrayage 14 est actionné pour désolidariser l'arbre de sortie moteur 12 de l'arbre d'entrée 18 de la boite de vitesse 20 et le vérin 50 commande la fourchette 48 de façon à ce que le pignon 44 soit placé dans la position active où il engrène (ou embraye) avec la roue dentée 34 de l'arbre de sortie moteur 12. Une fois cette disposition obtenue, l'organe de commande 40 de la machine 36 permet l'alimentation électrique de cette machine électrique via les batteries 38 de façon à entraîner en rotation le rotor 42 et par conséquent le pignon 44. Sous l'effet de cet engrènement, l'arbre moteur 12 est entraîné en rotation et dés que les conditions pour une combustion sont réunies dans le moteur 10, ce dernier démarre. La machine électrique joue dans ce cas le rôle d'un démarreur électrique classique.
De manière préférentielle, après le démarrage du moteur 10, l'accouplement entre l'arbre moteur 12 et le rotor 44 est maintenu pendant la marche du moteur thermique qui entraîne l'essieu moteur par l'intermédiaire de la boite de vitesse et du pont. Dans cet arrangement, le rotor de la machine électrique est entraînée en rotation par l'arbre 12 et cette machine fonctionne comme une génératrice d'électricité qui est utilisée pour recharger les batteries et/ou alimenter les accessoires et/ou organes du moteur 10 et/ou du véhicule.

Dans l'autre configuration illustrée à la figure 2, seule la machine électrique 36 est utilisée pour entraîner l'essieu moteur 24 et le moteur thermique 10 est inactif. Pour cela, cette machine est alimentée par les batteries 38 et le dispositif de commande 40 contrôle la vitesse de rotation du rotor 42. Le pignon 44 est alors commandé en déplacement axial par le moyen de commande 46 formé par le vérin 50 et la fourchette 48 à partir de sa position engrenée avec la roue dentée 34 montrée à la figure 1, pour engrener avec la roue dentée 30 placée sur l'essieu moteur de manière à embrayer l'accouplement 30.

De plus et de manière avantageuse, lors du freinage du véhicule, il y a possibilité de récupérer cette énergie de freinage par l'intermédiaire de la machine 36 qui ne sera plus une machine motrice mais une machine réceptrice d'énergie mécanique qui, comme pour un générateur électrique, sera transformée en énergie électrique pour être utilisée ou stockée dans les batteries 38.

Dans une variante pour démarrer le moteur thermique alors que le véhicule est en déplacement sous l'effet du moteur électrique, il peut être prévu d'utiliser la configuration de la figure 2 où le pignon 44 est embrayé avec la roue dentée solidaire de l'essieu moteur 24.

Dans cette configuration, un rapport de boite est enclenché et l'embrayage 14 est en position désaccouplé. L'organe de commande 40 permet l'alimentation électrique de la machine électrique via les batteries 38 de façon à entraîner en rotation le rotor 42 et par conséquent le pignon 44 et la roue dentée 30. Sous l'effet de cet engrènement, l'essieu moteur 24 est entraîné en rotation ainsi que l'arbre de sortie boite 22 au travers du pont 26. Ce mouvement de rotation est ensuite transmis à l'arbre d'entrée de boite 18 par la boite de vitesse. En agissant sur l'embrayage 14 de manière à assurer un glissement entre les deux parties de cet embrayage puis un accouplement entre celles-ci, la sortie moteur 12 est entraînée en rotation. Dès que les conditions pour une combustion sont réunies dans les chambres de combustion de ce moteur 10, ce dernier démarre.

De manière également préférentielle, après le démarrage du moteur 10, l'accouplement entre l'essieu moteur 24 et le rotor 42 est maintenu pendant la marche du moteur thermique et la machine électrique fonctionne comme une génératrice d'électricité lors du mouvement en rotation de l'essieu moteur pour le déplacement de véhicule par le moteur thermique.

Il peut être également envisagé de démarrer le moteur thermique par le même processus décrit ci-dessus mais en réalisant un accouplement entre le pignon 44 et une roue dentée portée par l'arbre de sortie de boite 22.

Bien entendu et cela sans sortir du cadre de l'invention, il est possible d'utiliser simultanément le moteur électrique et le moteur thermique pour entraîner en rotation l'essieu moteur, les puissances de ces deux types de moteurs se combinant et cela pour les deux configurations illustrées aux figures 1 et 2.

La présente invention n'est pas limitée à l'exemple décrit ci-dessus mais englobe toutes variantes ou équivalents.
Notamment, il peut être envisagé de munir les accouplements 28, 32 de tous dispositifs facilitant l'engrènement du pignon 44 avec les roues dentées 30, 34, tels que des assemblages à synchronisation, plus communément appelés synchros.
De même, le moteur thermique mentionné dans la description ci-dessus couvre aussi bien les moteurs à combustion interne fonctionnant avec des carburants fossiles, comme l'essence, le diesel ou le gaz qu'avec des biocarburants de type éthanol ou autres.

## Revendications

1. Système d'entraînement en déplacement pour véhicule hybride comprenant un moteur thermique (10) avec un arbre de sortie moteur (12) portant un embrayage (14), un arbre mené (18) relié audit embrayage et connecté à un moyen de variation de vitesse (20), au moins une machine électrique (36) avec un rotor (42), une chaîne de transmission de mouvement (16) entre le moyen de variation de vitesse (20) et les roues (17) du véhicule, ladite chaîne comportant un arbre de sortie (22) du moyen de variation de vitesse (20) et un essieu moteur (24) relié audit arbre de sortie, un accouplement débrayable (28) à engrènement entre un des éléments (22, 24) de la chaîne de transmission et le rotor (42) de la machine électrique (36) et un autre accouplement débrayable (32) à engrènement entre l'arbre de sortie (12) du moteur thermique (10) et ledit rotor, **caractérisé en ce que** le rotor (42) de la machine électrique (36) porte une partie (44) d'accouplement opérationnel avec une autre partie (30, 34) de l'un ou l'autre des accouplements (28, 32), et la partie (44) est un pignon (44) mobile axialement le long dudit rotor.

2. Système d'entraînement selon la revendication 1, **caractérisé en ce que** l'essieu moteur (24) porte une roue dentée (30), liée en rotation avec ledit essieu, pour coopérer avec le pignon (44) de manière à former un accouplement débrayable (28).

3. Système d'entraînement selon la revendication 1, **caractérisé en ce que** l'arbre de sortie de boite (22) porte une roue dentée pour coopérer avec le pignon (44) de manière à former un accouplement débrayable (28).

4. Système d'entraînement selon l'une des revendications 1 à 3, **caractérisé en ce que** l'arbre de sortie (12) porte une roue dentée (34), liée en rotation avec ledit arbre et placée entre le moteur thermique et l'embrayage, pour coopérer avec le pignon (44) de manière à former un autre accouplement débrayable (30).

5. Système d'entraînement selon l'une des revendications 1 à 4, **caractérisé en ce qu'**il comprend des moyens de commande (46, 48, 50) en déplacement du pignon (44).

## Claims

1. A displacement driving system for a hybrid vehicle including a heat engine (10) with an output drive shaft (12) bearing a clutch (14), a driven shaft (18) linked to said clutch and connected to a gear-change means (20), at least one electric machine (36) with a rotor (42), a chain for transmission of movement (16) between the gear-change means (20) and the wheels (17) of the vehicle, said chain comprising an output shaft (22) of the gear-change means (20) and a drive axle (24) linked to said output shaft, a disengageable coupling (28) which engages between one of the elements (22, 24) of the transmission chain and the rotor (42) of the electric machine (36) and another disengageable coupling (32) which engages between the output shaft (12) of the heat engine (10) and said rotor, **characterised in that** the rotor (42) of the electric machine (36) bears a part (44) for operational coupling with another part (30, 34) of one or the other of the couplings (28, 32), and the part (44) is a pinion (44) which is axially moveable along said rotor.

2. The driving system according to claim 1, **characterised in that** the drive axle (24) bears a toothed wheel (30), which is rotationally linked to said axle, to co-operate with the pinion (44) so as to form a disengageable coupling (28).

3. The driving system according to claim 1, **characterised in that** the box output shaft (22) bears a toothed wheel to cooperate with the pinion (44) so as to form a disengageable coupling (28).

4. The driving system according to one of claims 1 to 3, **characterised in that** the output shaft (12) bears a toothed wheel (34), rotationally linked to said shaft in rotation and placed between the heat engine and the clutch, to co-operate with the pinion (44) so as to form another disengageable coupling (30).

5. The driving system according to one of claims 1 to 4, **characterised in that** it includes means (46, 48, 50) for controlling the displacement of the pinion (44).

## Patentansprüche

1. Antriebssystem für ein Hybridfahrzeug, umfassend eine Brennkraftmaschine (10) mit einer Motorabtriebswelle (12), die eine schaltbare Kupplung (14) trägt, eine getriebene Welle (18), die mit dieser schaltbaren Kupplung und mit einem Drehzahländerungsmittel (20) verbunden ist, mindestens eine elektrische Maschine (36) mit einem Läufer (42), eine Kraftübertragungskette (16) zwischen dem Drehzahländerungsmittel (20) und den Rädern (17) des Fahrzeugs, wobei diese Kette eine Abtriebswelle (22) des Drehzahländerungsmittels (20) und eine Antriebsachse (24) umfasst, die mit dieser Abtriebswelle verbunden ist, eine ausrückbare Einrückkupplung (28) zwischen einem der Elemente (22, 24) der Kraftübertragungskette und dem Läufer (42) der elektrischen Maschine (36), und eine andere ausrückbare Einrückkupplung (32) zwischen der Abtriebswelle (12) der Brennkraftmaschine (10) und diesem Läufer, **dadurch gekennzeichnet, dass** der Läufer (42) der elektrischen Maschine (36) ein Kupplungsteil (44) trägt, das mit einem anderen Teil (30, 34) der einen oder anderen Kupplung (28, 32) betreibbar ist, und dass das Teil ein Ritzel (44) ist, der in der Axialrichtung entlang dieses Läufers beweglich ist.

2. Antriebssystem nach Anspruch 1, **dadurch gekennzeichnet, dass** die Antriebsachse (24) ein Zahnrad (30) trägt, das mit dieser Achse drehfest verbunden ist, um derart mit dem Ritzel (44) zusammenzuwirken, dass eine ausrückbare Kupplung (28) geformt wird.

3. Antriebssystem nach Anspruch 1, **dadurch gekennzeichnet, dass** die Abtriebswelle (22) des Getriebes ein Zahnrad trägt, das mit dem Ritzel (44) zusammenwirkt, um eine ausrückbare Kupplung (28) zu formen.

4. Antriebssystem nach einem der Ansprüche 1 bis 3, **dadurch gekennzeichnet, dass** die Abtriebswelle (12) ein Zahnrad (34) trägt, das mit dieser Welle drehfest verbunden ist und zwischen der Brennkraftmaschine und der Kupplung liegt, um derart mit den Ritzel (44) zusammenwirken, dass eine andere ausrückbare Kupplung (30) geformt wird.

5. Antriebssystem nach einem der Ansprüche 1 bis 4, **dadurch gekennzeichnet, dass** es Mittel zur Steuerung (46, 48, 50) der Bewegung des Ritzels (44) umfasst.
